# EUROPEAN PATENT SPECIFICATION

(11) **EP 3 232 797 B1**
(45) Date of publication and mention of the grant of the patent: **11.03.2026**
(21) Application number: 15790121.6
(22) Date of filing: 03.11.2015
(51) Int. Cl.: A23L 33/20, A23G 1/36, A23G 3/40, A23G 3/34, A23G 1/30

(54) **METHOD FOR REDUCING TOTAL AND SATURATED FATS IN CONFECTIONERY FILLINGS**
VERFAHREN ZUR VERMINDERUNG DES GESAMTFETTGEHALTS UND GESÄTTIGTER FETTE IN SÜSSWARENFÜLLUNGEN
PROCÉDÉ DE RÉDUCTION DE LA TENEUR TOTALE DE GRAISSES ET DE GRAISSES SATURÉES DANS LES GARNITURES DE CONFISERIE

(30) Priority: 19.12.2014 EP 14199433
(43) Date of publication of application: 25.10.2017
(73) Proprietor: Société des Produits Nestlé S.A., 1800 Vevey (CH)
(72) Inventor: ALTHAUS, Tim Oliver, York Yorkshire YO1 9XA (GB); CHISHOLM, Helen, CH-1033 Cheseaux (CH); BATISTA, Rodrigo De Godoy, Las Condes Región Metropolitana 7550000 (CL)
(74) Representative: Slaven, John William
(86) International application number: PCT/EP2015/075563
(87) International publication number: WO 2016/096232

(56) References cited:
- EP-A2- 0 293 194
- WO-A1-2009/013473
- WO-A1-2010/080872
- US-A1- 2014 363 539

## Description

### FIELD OF THE INVENTION

The present invention relates to a method for reducing the amount of total and saturated fats in fat based confectionery fillings, in particular confectionery fillings originating from a fat continuous dispersion of particles. The invention also relates to the reduced in fats confectionery filling obtained according to this method and to the formation of a particle network in such confectionery filling to achieve the reduction in total and saturated fats.

### BACKGROUND OF THE INVENTION

Any discussion of the prior art throughout the specification should in no way be considered as an admission that such prior art is widely known or forms part of common general knowledge in the field.

Confectionery fat-based fillings are widely appreciated. However, such products tend to have a nutritional profile high in total fat and high in saturated fats.

The type of fat used in such confectionery products governs the texture as well as other organoleptic properties of the product. In general confectionery fillings must provide a sufficiently firm texture to ensure shape stability of the product and to avoid substantial deformation of the shape of the product upon handling. It is also desirable that the filling should melt in the mouth and that it should only have minor fractions of solids that melt above the mouth temperature to yield a creamy mouth feel. In order to impart the required textural and indulgent, creamy, sensorial properties to fat-based confectionery product, high SFA, solid type fats are normally used.

However, high fat consumption and in particular high consumption of saturated fatty acids (SFA) are widely considered to have negative health benefits.

Hydrogenation of oil is a commonly used technique to obtain solid type fats from liquid oils. Besides the resulting high SFA content, the presence of trans fatty acids in partially hydrogenated fats has become a severe health issue. Trans fatty acids are associated with cardiovascular diseases as well as with the risk of getting diabetes and some types of cancer such as breast cancer.

Hence, it would be desirable to reduce the total fat content of fat based confectionery fillings and/or replace high SFA solid-type fats, or hydrogenated fats containing significant levels of trans fatty acids, by low SFA liquid oils.

However, for persons skilled in the art it is evident that in most cases of solid confectionery products it is not possible to use a liquid oil instead of a solid fat. A difficulty in just increasing / replacing the solid fats with low SFA liquid oils is that this impacts on the physical properties such as the taste, texture and the overall appearance of the filling compositions (organoleptic parameters). Also, the replacement of solid fats by low SFA liquid oils in the recipe can have a negative impact on processability, such as giving a much softer and stickier ingredient mixture, which can be unprocessable.

WO 2010/080872 A1 discloses fillings comprising soybean oil and solid particulate ingredients (Table 6 and 10). In both fillings, some of all of the solid particulate ingredients may also be defined as hydrophilic agents.

WO 2009/013473 A1 discloses a filling comprising fat, cocoa powder, skimmed milk powder and sugar (Example 2).

EP 0 293 194 A2 discloses formulations which comprise sunflower oil and other fats, cocoa powder, skimmed milk powder and sugar.

US 2014/363539 A1 teaches the addition of glycerol to fat-based fillings.

There is a desire to provide fat continuous confectionery fillings with improved nutritional profile, particularly reduced fat and SFA content.

Accordingly, there remains a need for fat based confectionery fillings with improved nutritional profile, particularly reduced fat and SFA content, whilst maintaining good texture and organoleptic properties.

It is an object of the invention to overcome or ameliorate at least one of the disadvantages of the prior art, or to provide a useful alternative. In particular, it is desirable to provide fat continuous confectionery fillings having a low SFA and total fat content, without compromising the organoleptic parameters.

### SUMMARY OF THE INVENTION

In one aspect of the present invention, a process is provided for the preparation of a fat based confectionery filling which comprises:
fat in an amount comprised between 10 and 40% w/w;
oil in an amount comprised between 10 and 40% w/w, wherein the fat content indicates the total fat content in the composition, comprising the content coming from solid fats and/or the content of liquid oils;
hydrophilic agent that is liquid at room temperature in an amount comprised between 0.05 % and 5% w/w;
solid particle ingredient in the form of a fine powder in an amount comprised between 60 and 90 % w/w;
such process comprising the steps of:
   (a) mixing the powder ingredients with oil and/or fat at a speed comprised between 60 and 95 rpm for a time comprised between 60 and 200 seconds;
   (b) mixing at a speed comprised between 115 and 135 rpm for a time comprised between 60 and 200 seconds; and
   (c ) adding the at least one hydrophilic agent while gently mixing the mass at a speed comprised lower than 80 rpm for a time comprised between 10 and 30
seconds, wherein the hydrophilic agent is selected from the group consisting of polyols, water, aqueous solutions and mixtures thereof and the solid particle ingredient is selected from the group consisting of Cocoa powder; Dried fruits powder; Dried vegetables powder; Dried vegetable juices and leaves; Tapioca flour and potato flour; Toasted fruit seeds flour; Coconut powder; Plant proteins of any kind; and mixtures thereof.

In a second aspect of the present invention, a fat based confectionery filling based is provided which comprises:
fat in an amount comprised between 10 and 40% w/w;
oil in an amount comprised between 10 and 40% w/w, wherein the fat content indicates the total fat content in the composition, comprising the content coming from solid fats and/or the content of liquid oils;
hydrophilic agent that is liquid at room temperature in an amount comprised between 0.05 % and 5% w/w;
solid particle ingredient in the form of a fine powder in an amount comprised between 60 and 90 % w/w;
wherein the hydrophilic agent is selected from the group consisting of polyols, water, aqueous solutions and mixtures thereof and the solid particle ingredient is selected from the group consisting of Cocoa powder; Dried fruits powder; Dried vegetables powder; Dried vegetable juices and leaves; Tapioca flour and potato flour; Toasted fruit seeds flour; Coconut powder; Plant proteins of any kind; and mixtures thereof.

In a third aspect, the present invention provides the use of a network of solid particle ingredients in a confectionery filling based on a fat continuous dispersion to reduce the amount of total and/or saturated fats in the filling, wherein the network is formed between particles of the solid particle ingredient along with the hydrophilic agent present in the fat continuous phase, wherein the process of claim 1 is used to prepare the network.

### Description of the Figures

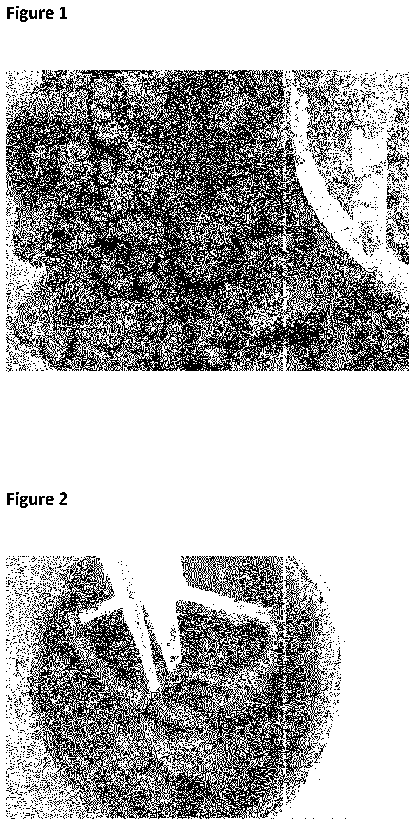

**Figure 1** represents a picture taken at end of step a) during preparation of a fat based filling according to one embodiment of the present invention.
**Figure 2** represents a picture taken at end of step b) during preparation of a fat based filling according to one embodiment of the present invention.

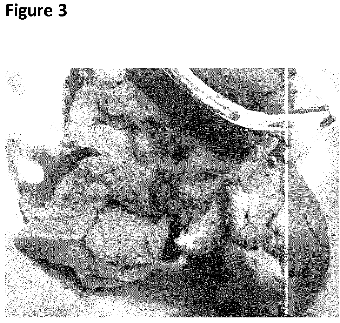

**Figure 3** represents a picture taken at end of step c) during preparation of a fat based filling according to one embodiment of the present invention.

### DETAILED DESCRIPTION OF THE INVENTION

The inventors of the present invention have surprisingly found that confectionery fillings based on a fat continuous dispersion may be prepared with a reduced amount of total and /or saturated fats than in traditional filling recipes if a network of particles is generated and maintained during the process of preparation of said fillings.

When in liquid phase, fat continuous dispersions may normally be described as freely moving individual particles in a continuous liquid phase (fat phase). Particle network is the name given to a dispersion of particles which are weakly bonded together. The phenomenon is observed in suspensions where a small amount of a secondary fluid (immiscible with the continuous phase) is added which causes agglomeration due to the formation of capillary bridges between particles leading to the creation of a particle network (Capillary forces in suspension rheology, E Koos, N Willenbacher, volume 331, Issue 6019, 18 February 2011, 897-900). Particles which are no more moving individually are instead part of a network which may have an impact on the rheology of the material.

Particle networks are known for their use to provide heat stability to chocolate.

Without wishing to be bound by theory, it is believed that thanks to the generation of a particle network in the fat continuous confectionery fillings the structure normally provided by crystallized fats is replaced and the amount of total and saturated fats in the filling recipe may be decreased.

The inventors have also found that confectionery fillings based on a fat continuous dispersion may be prepared with a reduced amount of total and/or saturated fats if a particle network is therein generated and that such fillings surprisingly maintain good stability, good texture and organoleptic properties.

All percentages are given in percent by weight, if not otherwise indicated.

Within the context of the present invention, the term "fat based confectionery filling" is to be understood as identifying confectionery fillings which are based on a continuous matrix of fat material and which originates from a fat continuous dispersion of particles.

Within the context of the present invention the term "fat" is to be understood as identifying fats which are typically solid at room such as coconut oil, palm kernel oil, palm oil, cocoa butter, butter oil, lard, tallow, oil / fat fractions such as lauric or stearic fractions, hydrogenated oils, and blends thereof as well as fats which are typically liquid at room temperature such as any vegetable or animal oil. The oil can comprise mineral oils and/or organic oils (oils produced by plants or animals), in particular food grade oils. Examples of oils include: sunflower oil, rapeseed oil, olive oil, soybean oil, fish oil, linseed oil, safflower oil, corn oil, algae oil, cottonseed oil, grape seed oil, nut oils such as hazelnut oil, walnut oil, rice bran oil, sesame oil, peanut oil, palm oil, palm kernel oil, coconut oil, & emerging seed oil crops such as high oleic sunflower oil, high oleic rapeseed, high oleic palm, high oleic soybean oils & high stearin sunflower or combinations thereof.

The fat content in the product of the present invention may be provided by fats of any origin. The fat content is intended to indicate the total fat content in the composition, comprising either the content coming from solid fats and/or the content of liquid fats (oils).

With respect to the mixture used in the process of the present invention, which is defined as comprising a specific amount of total fats, and a specific amount of oils, it is clear to the skilled person that oil content will also contribute to the total amount of fats and computed therein.

In one embodiment, the fat based confectionery filling based comprises fats in an amount comprised between 10 and 40% w/w and oil in an amount comprised between 10 and 30% w/w.

In one embodiment, an oil with a low SFA content is used such as high oleic sunflower oil or high oleic rapeseed oil.

In another embodiment, the total fat content is provided by liquid oil.

In the invention, the hydrophilic agent is selected in the group consisting of: polyols, water, aqueous solutions, and mixtures thereof.

In one embodiment, the hydrophilic agent is a polyol. In one embodiment, the polyol is selected in the group consisting of: glycerol, polyol solutions (syrups) for example sorbitol, xylitol, maltitol, mannitol solutions, sugar solution such as fructose, dextrose, sucrose, galactose solutions, or any mixture thereof. In a further embodiment, the polyol is glycerol.

In the present invention, the hydrophilic ingredient is liquid at room temperature.

In one embodiment, the hydrophilic agent is present in an amount comprised between 0.05 % and 3% w/w. In another embodiment, the hydrophilic agent is present in an amount comprised between 0.1 % and 2% w/w.

The solid particle ingredient of the invention is selected in the group consisting of: Cocoa powder; Dried fruits powder (ex.: strawberry, banana); Dried vegetables powder; Dried vegetable juices and leaves; Tapioca flour and potato flour; Toasted fruit seeds flour; Coconut powder; Plant proteins of any kind; and mixtures thereof.

In one embodiment, the solid particle ingredient is cocoa powder.

In one embodiment, the solid particle ingredient is at least in part in crystalline from.

In one embodiment, the solid particle ingredient has a particle size lower than 150 µm (d0,9).

Without wishing to be bound by theory, it is believed that due to the presence in the fat continuous phase of the particles of the solid particle ingredient along with the hydrophilic ingredient a particle network is formed.

In one embodiment of the present invention, the process is performed at room temperature. In another embodiment of the present invention, if solid fats are used in the process, these are liquefied before mixing with other ingredients, for example by heating them at a temperature at least 5 deg above their melting temperature.

In one embodiment of the present invention, the process may be performed in any type of equipment which is able to perform a mixing action at modulated speed. Non limiting examples of this type of equipment are: vertical and horizontal mixers, turbo mixers, planetary and Double Planetary mixers, continuous mixers, inline mixers, extruders, screw mixers, high shear and ultra-high shear mixers, cone and double cone mixers, static and dynamic mixers, rotary and static drum mixers, rotopin mixer, ribbon blenders, Paddle Blenders, Tumble Blenders, Solids/Liquid Injection Manifold, Dual-Shaft and Triple Shaft Mixers, high viscosity mixers, V blenders, vacuum mixers, jet mixers, Dispersion Mixers, Mobile Mixers and banbury mixers.

In one embodiment of the present invention, the mixing step a) of the process is performed at speed such that the oil spreads out of the solids of the initial dry mixture making the powder agglomerate.

In one embodiment of the present invention, the mixing step b) of the process is performed at speed that improves homogenization of the mixture.

In one embodiment of the present invention, the mixing step b) of the process is performed at speed such that the mass turns into a thick but still liquid mass due to improved agglomeration.

In one embodiment of the present invention, the mixing step c) of the process is performed at speed such that the hydrophilic agent is incorporated without destroying particle network.

In the present invention, the mixing step a) of the process is performed at a rotational speed comprised between 60 and 95 rpm for a time comprised between 60 and 200 seconds.

In the present invention, the mixing step b) of the process is performed at a rotational speed comprised between 115 and 135 rpm for a time comprised between 60 and 200 seconds.

In the present invention, the mixing step c) of the process is performed at a rotational speed lower than 80 rpm for a time comprised between 10 and 30 seconds.

In one embodiment of the present invention, when an Hobart mixer is used, mixing step a) of the process is performed at a rotational speed comprised between 60 and 95 rpm, the mixing step b) of the process is performed at a rotational speed comprised between 115 and 135 rpm, the mixing step c) of the process is performed at a rotational speed lower than 80 rpm.

It will be evident to the skilled person which should be the rotational speeds to be used in steps a), b) and c) in the cases where a mixer other than a Hobart mixer is used.

In the present invention, a process is provided for the preparation of a confectionery filling based on a fat continuous dispersion which comprises:
fat in an amount comprised between 10 and 40% w/w;
oil in an amount comprised between 10 and 40% w/w, wherein the fat content indicates the total fat content in the composition, comprising the content coming from solid fats and/or the content of liquid oils;
hydrophilic agent that is liquid at room temperature in an amount comprised between 0.05 % and 5% w/w;
At least one solid particle ingredient in the form of a fine powder in an amount comprised between 60 and 90 % w/w;
such process comprising the steps of:
   (a) mixing the powder ingredients with fat at a rotational speed comprised between 60 and 95 rpm for a time comprised between 60 and 200 seconds;
   (b) Mixing at a rotational speed comprised between 115 and 135 rpm for a time comprised between 60 and 200 seconds;
   (c) Adding the at least one hydrophilic agent while mixing the mass at a rotational speed comprised lower than 80 rpm for a time comprised between 10 and 30 seconds, wherein the hydrophilic agent is selected from the group consisting of polyols, water, aqueous solutions and mixtures thereof and the solid particle ingredient is selected from the group consisting of Cocoa powder; Dried fruits powder; Dried vegetables powder; Dried vegetable juices and leaves; Tapioca flour and potato flour; Toasted fruit seeds flour; Coconut powder; Plant proteins of any kind; and mixtures thereof.

In one embodiment, the fat based confectionery filling comprises an emulsifier. In another embodiment, the emulsifier is soya or sunflower lecithin.

The fat based confectionery filling according to the present invention may be used in a variety of applications including but not limited to a filling for a sandwich biscuit, a filling for a wafer, a filling for an extruded snack, a filling for a praline or for a chocolate shelled product. It will be apparent to the skilled person how such filling may be incorporated in the above mentioned products according to well know procedures in the art.

Unless noted otherwise, all percentages in the specification refer to weight percent, where applicable.

Unless defined otherwise, all technical and scientific terms have and should be given the same meaning as commonly understood by one of ordinary skill in the art to which this invention belongs.

It should be noted that embodiments and features described in the context of one of the aspects or embodiments of the present invention also apply to the other aspects of the invention.

The invention will now be described in further details in the following nonlimiting examples.

### EXAMPLES

### Reference Example 1

### Preparation of a traditional Confectionery Biscuit filling

A traditional biscuit filling was prepared according to the recipe of Table 1 here below.

**Table 1**

| Ingredient | % (w/w) |
|---|---|
| Cocoa Powder 10-12% Fat | 11.00% |
| Soya Lecithin | 0.07% |
| Whole Milk whole powder 28% fat | 7.00% |
| Palm Oil (38-43 deg C) | 27.90% |
| White Sugar Powder (75-212 mm) | 53.30% |
| Flavours | 0.73% |
| Total | 100% |

### Process:

The traditional filling is prepared by mixing the ingredients together and mixing until the filling is completely homogeneous.

### Example 2

### Preparation of a Confectionery Chocolate Biscuit filling according to the invention

A biscuit filling according to the present invention was prepared according to the recipe of Table 2 here below.

**Table 2**

| Ingredient | % (w/w) |
|---|---|
| Cocoa Powder 10-12% Fat | 12.50% |
| Soya Lecithin | 0.10% |
| Whole Milk whole powder28% fat | 8.50% |
| Sunflower Oil | 17.60% |
| White Sugar Powder (75-212 mm) | 60.00% |
| Flavours | 0.80% |
| Glycerine 99.5% | 0.50% |
| Total | 100% |

### Process:

The filling was prepared using a Salva Mixer with capacity of 15 Kg.

Four steps were necessary to prepare the cream:
**Step 1:** all the ingredients except glycerol were added in the following order: 1^{st} - fat or oil; 2^{nd} - Lecithin + flavours; 3^{rd} - Sugar powder + cocoa powder + whole milk powder; and mixed for 180 seconds at low mixer speed.
**Step 2:** the mixing speed was increased (mid mixer speed for 180 seconds) and the cream turned into a paste.
**Step 3:** the speed was increased to maximun (high mixer speed for 120 seconds) to form a viscous but fluid cream.
**Step 4:** the glycerol was added and the cream was mixed very gently at low mixer speed for 15 seconds to allow the network formation.

### Example 3

### Preparation of Sandwich Biscuit

Sandwich biscuits (Example 3a and Example 3b) were prepared using the confectionery fillings of Reference Example 1 and Example 2 respectively and standard chocolate round biscuits (Triton Biscuit) using a Peters machine with a capacity of 600 sandwich /min . Sandwich biscuits contained the ratio of 30% filling and 70% biscuit.

### Example 4

### Shelf life study for sandwich biscuits of Example 3a and 3b

Sandwich Biscuits of Examples 3a and 3b as above described were evaluated during 8 weeks counting from production date of the samples. The samples were stored in stoves under controlled conditions at 35°C and 85% RH (relative humidity).

The samples were evaluated using descriptive sensorial evaluation (appearance, smell, flavor, texture and after taste); 8 trained panelists participated per session, evaluating Samples of Example 3a (Reference) and 3b (Invention) at weekly frequency.

One week under the conditions 35°C and 85% RH simulate approximately 1 month under 25°C and 70% RH condition. So the study covered the equivalent of the desired biscuit shelf life (8 months).

The principal findings deriving from this study may be summarized as follows:
- Regarding filling deterioration signs of changes in both sample 3a and 3b were identified by tasters after the 7^{th} week. The changes were considered acceptable in the sensorial range for products at this age and presented the same intensity in both samples. The use of oil in fillings could be associated to a more rancid characteristic during shelf life, but in this case no changes in rancidity were perceived;
- The samples 3b in the filling had 37% fat reduction and the recipe was balanced with the other components on the recipe (mainly cocoa, milk powder and fat). It explains why compared to samples 3a color was darker along all the study and flavor and smell were slightly more intense on chocolate and cocoa as well as bitter aftertaste.
- a gradually change from soft to a harder and dryer texture was registered for the filling, this effect stated in the second week and stabilized after fourth week maintaining the same texture until the end of the shelf life.

### Conclusions:

Shelf life stability for tested samples was not affected by the reduction in total and saturated fats.

The flavor and smell differences for samples 3a and 3b were not significant and the aging and rancidity was not accelerated in the sample 3b.

A significant difference was observed in the texture and brightness of the filling for sample 3b vs 3a. Samples 3b became of harder texture and shinier surface.

This study demonstrate that according to the present invention it was possible to reduce total fat content and the saturated fat content of a biscuit recipe, without affecting the shelf life stability and principal sensory properties of the samples. On a filling recipe scale, the reduction was 37% of total fats and 72% of saturated fats.

### Example 5

### Preparation of a Strawberry Confectionery Biscuit filling according to the invention

A biscuit filling according to the present invention was prepared according to the recipe of Table 3 here below.

**Table 3**

| Ingredient | % (w/w) |
|---|---|
| Sunflower oil | 18.43% |
| White Sugar Powder (75-212 mm) | 73.97% |
| Soya Lecithin Liquid | 0.08% |
| Carmin Colour | 0.08% |
| Citric acid solution 50% | 0.25% |
| Strawberry Flavour | 6.31% |
| Fiber | 0.80% |
| Glycerine 99.5% | 0.50% |
| Total | 100% |

### Process:

The filling was prepared using a Kitchen Aid Mixer (Hobart Mixer) with capacity for 2 kg as below described
**Step 1:** oil was mixed with other powder ingredients and mixed for 180 seconds at speed 1 or 2 (60 to 95 rpm) depending on the strength necessary in the mixer to keep a constant movement for 180 seconds.
**Step 2:** liquid soy lecithin was added and the mixing speed increased to speed 3or 4 of the mixer (115 to 135 rpm) for 180 seconds.
**Step 3:** glycerol was added and the filling mixed for 20 seconds as speed 1 (60 rpm).

The Strawberry filling as above described achieved 30% fat reduction and 70% SFA reduction while presenting good sensorial results.

### Example 6

### Preparation of a White chocolate Confectionery Biscuit filling according to the invention

A biscuit filling according to the present invention was prepared according to the recipe of Table 4 here below.

**Table 4**

| Ingredient | % (w/w) |
|---|---|
| Sunflower oil | 19.06% |
| White Sugar Powder (75-212 mm) | 60.38% |
| Soya Lecithin liquid | 0.07% |
| Fiber | 6.35% |
| Milk Powder 26% fat | 4.32% |
| Flavour | 1.03% |
| White chocolate mass | 3.92% |
| Salt | 0.05% |
| Whey Powder demineralized | 4.32% |
| Glycerine 99.5% | 0.50% |
| Total | 100% |

### Process:

The filling was prepared using a Kitchen Aid Mixer (Hobart Mixer) with capacity for 2 kg as below described
**Step 1:** oil was mixed with other powder ingredients and mixed for 180 seconds at speed 1 or 2 (60 to 95 rpm) depending on the strength necessary in the mixer to keep a constant movement for 180 seconds.
**Step 2:** liquid soy lecithin was added and the mixing speed increased to speed 3or 4 of the mixer (115 to 135 rpm) for 180 seconds.
**Step 3:** glycerol was added and the filling mixed for 20 seconds as speed 1 (60 rpm).

The White chocolate filling as above described achieved 30% fat reduction and 70% SFA reduction while presenting good sensorial results.

### Example 7 to 12

### Preparation of Confectionery Biscuit fillings according to the invention

Biscuit fillings according to the present invention were prepared according to the recipes of Table 5 here below and the formation of particle network was visually assessed visually.

**Table 5**

| **Ingredient (% w/w)** | **Ex. 7** | **Ex. 8** | **Ex. 9** | **Ex. 10** | **Ex. 11** | **Ex. 12** |
|---|---|---|---|---|---|---|
| Cocoa Powder alkalized 10-12% fat | 12.4% | | | 80.5% | | |
| Fibre Powder | | 34.1% | | | | |
| Maltodexrine Corn 11-14 DE | | | | | | 58.5% |
| Polydextrose Litesse Ultra | | | | | 80.5% | |
| Soya lecithin Liquid | 0.2% | 0.2% | 0.2% | 0.2% | 0.2% | 0.5% |
| Sunflower Oil | 19% | 19% | 19% | 19% | 19% | 40% |
| White Sugar Powder (75-212 mm) | 68.1% | 46.4% | 80.5% | | | |
| Glycerin 99.5% | 0.3% | 0.3% | 0.3% | 0.3% | 0.3% | 1% |
| **Total** | 100% | 100% | 100% | 100% | 100% | 100% |

### Process:

The filling was prepared using a Kitchen Aid Mixer (Hobbart Mixer) with capacity for 2 kg as below described:
**Step 1:** oil was mixed with other powder ingredients and mixed for 180 seconds at speed 1 or 2 (60 to 95 rpm) depending on the strength necessary in the mixer to keep a constant movement for 180 seconds.
**Step 2:** liquid soy lecithin was added and the mixing speed increased to speed 3or 4 of the mixer (115 to 135 rpm) for 180 seconds.
**Step 3:** glycerol was added and the filling mixed for 20 seconds as speed 1 (60 rpm).

Particle network (PN) formation for Examples 7 to 13 was assessed visually and results are reported in table 6 here below:

**Table 6**

| **Sample** | **PN formation** | **Visual Perception of PN strength** |
|---|---|---|
| Example 7 | Yes | Strong |
| Example 8 | Yes | Strong |
| Example 9 | Yes | Strong |
| Example 10 | Yes | Medium |
| Example 11 | Yes | Very weak |
| Example 12 | Yes | Strong |

Based on the results obtained for the fillings according to Examples 2 and 5 to 12, it is shown how the particle network formation may be used in a number recipes based on a variety of ingredients to achieve total and saturated fat reduction when compared to a traditional filling recipe.

## Claims

1. A process for the preparation of a confectionery filling based on a fat continuous dispersion which comprises:
fat in an amount comprised between 10 and 40% w/w;
oil in an amount comprised between 10 and 40% w/w, wherein the fat content indicates the total fat content in the composition, comprising the content coming from solid fats and/or the content of liquid oils;
hydrophilic agent that is liquid at room temperature in an amount comprised between 0.05 % and 5% w/w;
at least one solid particle ingredient in the form of a fine powder in an amount comprised
between 60 and 90 % w/w;
such process comprising the steps of:
(a) mixing the powder ingredients with fat at a rotational speed comprised between 60 and 95 rpm for a time comprised between 60 and 200 seconds;
(b) mixing at a rotational speed comprised between 115 and 135 rpm for a time comprised
between 60 and 200 seconds; and
(c ) adding the at least one hydrophilic agent while mixing the mass at a rotational speed comprised lower than 80 rpm for a time comprised between 10 and 30 seconds, wherein the hydrophilic agent is selected from the group consisting of polyols, water, aqueous solutions and mixtures thereof and the solid particle ingredient is selected
from the group consisting of Cocoa powder; Dried fruits powder; Dried vegetables powder; Dried vegetable juices and leaves; Tapioca flour and potato flour; Toasted fruit seeds flour; Coconut powder; Plant proteins of any kind; and mixtures thereof.

2. A fat based confectionery filling is provided which is obtainable according to a process as claimed in claim 1 comprising:
fats in an amount comprised between 10 and 40% w/w;
oil in an amount comprised between 10 and 40%;
hydrophilic agent that is liquid at room temperature in an amount comprised between 0.05 % and 5% w/w;
solid particle ingredient in the form of a fine powder in an amount comprised between 60 and 90 % w/w, wherein the hydrophilic agent is selected from the group consisting of polyols, water, aqueous solutions and mixtures thereof and the solid particle
ingredient is selected from the group consisting of Cocoa powder; Dried fruits powder; Dried vegetables powder; Dried vegetable juices and leaves; Tapioca flour and potato flour; Toasted fruit seeds flour; Coconut powder; Plant proteins of any kind; and
mixtures thereof.

3. A confectionery filling according to claim 2 wherein the fat is sunflower or soybean oil.

4. A confectionery filling according to anyone of claims 2 or 3 wherein the hydrophilic agent is glycerol.

5. A confectionery filling according to anyone of claims 2 to 4 wherein the solid particle ingredient is cocoa powder.

6. A confectionery filling according to anyone of claims 2 to 4 wherein the solid particle ingredient is at least in part in crystalline form.

7. Use of a network of solid particle ingredients in a confectionery filling based on a fat continuous dispersion to reduce the amount of total and/or saturated fats in the filling, wherein the network is formed between particles of the solid particle ingredient along with the hydrophilic agent present in the fat continuous phase, wherein the process of claim 1 is used to prepare the network.

## Patentansprüche

1. Verfahren für die Herstellung einer Süßwarenfüllung basierend auf einer kontinuierlichen Fettdispersion, das umfasst:
Fett in einer Menge zwischen 10 und 40 % (w/w);
Öl in einer Menge zwischen 10 und 40 % (w/w), wobei der Fettgehalt den Gesamtfettgehalt in der Zusammensetzung angibt, umfassend den Gehalt aus festen Fetten und/oder den Gehalt an flüssigen Ölen;
hydrophiles Mittel, das bei Raumtemperatur flüssig ist, in einer Menge zwischen 0,05 % und 5 % (w/w);
mindestens einen festen Partikelbestandteil in der Form eines feinen Pulvers in einer Menge
zwischen 60 und 90 % (w/w);
ein derartiges Verfahren umfassend die Schritte:
(a) Mischen der Pulverbestandteile mit Fett bei einer Rotationsgeschwindigkeit zwischen 60 und 95 U/min für eine Zeit zwischen 60 und 200 Sekunden;
(b) Mischen bei einer Rotationsgeschwindigkeit zwischen 115 und 135 U/min für eine Zeit
zwischen 60 und 200 Sekunden; und
(c) Zugeben des mindestens einen hydrophilen Mittels unter Mischen der Masse bei einer Rotationsgeschwindigkeit von weniger als 80 U/min für eine Zeit zwischen 10 und 30 Sekunden, wobei das hydrophile Mittel aus der Gruppe ausgewählt ist, bestehend aus Polyolen, Wasser, wässrigen Lösungen und Mischungen davon, und der feste Partikelbestandteil aus der Gruppe ausgewählt ist,
bestehend aus Kakaopulver; Trockenfruchtpulver; Trockengemüsepulver; Trockengemüsesäfte und -blätter; Tapiokamehl und Kartoffelmehl; geröstetem Fruchtkernmehl; Kokosnusspulver; pflanzlichen Proteinen jeglicher Art; und Mischungen davon.

2. Süßwarenfüllung auf Fettbasis, die nach einem Verfahren nach Anspruch 1 erhältlich ist, umfassend:
Fette in einer Menge zwischen 10 und 40 % (w/w);
Öl in einer Menge zwischen 10 und 40 %;
hydrophiles Mittel, das bei Raumtemperatur flüssig ist, in einer Menge zwischen 0,05 % und 5 % (w/w);
einen festen Partikelbestandteil in der Form eines feinen Pulvers in einer Menge zwischen 60 und 90 % (w/w), wobei das hydrophile Mittel aus der Gruppe ausgewählt ist, bestehend aus Polyolen, Wasser, wässrigen Lösungen und Mischungen davon, und der feste Partikelbestandteil
aus der Gruppe ausgewählt ist, bestehend aus Kakaopulver; Trockenfruchtpulver; Trockengemüsepulver; Trockengemüsesäfte und -blätter; Tapiokamehl und Kartoffelmehl; geröstetem Fruchtkernmehl; Kokosnusspulver; pflanzlichen Proteinen jeglicher Art; und Mischungen davon.

3. Süßwarenfüllung nach Anspruch 2, wobei das Fett Sonnenblumen- oder Sojaöl ist.

4. Süßwarenfüllung nach einem der Ansprüche 2 oder 3, wobei das hydrophile Mittel Glycerin ist.

5. Süßwarenfüllung nach einem der Ansprüche 2 bis 4, wobei der feste Partikelbestandteil Kakaopulver ist.

6. Süßwarenfüllung nach einem der Ansprüche 2 bis 4, wobei der feste Partikelbestandteil mindestens teilweise in kristalliner Form vorliegt.

7. Verwendung eines Netzwerks aus festen Partikelbestandteilen in einer Süßwarenfüllung basierend auf einer kontinuierlichen Fettdispersion, um die Menge an Gesamtfett und/oder gesättigten Fetten in der Füllung zu verringern, wobei das Netzwerk zwischen Partikeln des festen Partikelbestandteils zusammen mit dem in der kontinuierlichen Fettphase vorhandenen hydrophilen Mittel gebildet wird, wobei das Verfahren nach Anspruch 1 verwendet wird, um das Netzwerk herzustellen.

## Revendications

1. Procédé de préparation d'une garniture de confiserie à base de dispersion continue de matière grasse comprenant :
de la matière grasse dans une proportion comprise entre 10 et 40 % p/p ;
de l'huile dans une quantité comprise entre 10 et 40 % p/p, dans lequel la teneur en matières grasses indique la teneur totale en matières grasses dans la composition, y compris la teneur provenant des matières grasses solides et/ou la teneur en huiles liquides ;
un agent hydrophile liquide à température ambiante en quantité comprise entre 0,05 % et 5 % p/p ;
au moins un ingrédient à particules solides sous forme de poudre fine en une quantité comprenant
entre 60 et 90 % p/p ;
un tel procédé comprenant les étapes consistant à :
(a) mélanger les ingrédients en poudre avec la matière grasse à une vitesse de rotation comprise entre 60 et 95 tr/min pendant une durée comprise entre 60 et 200 secondes ;
(b) mélanger à une vitesse de rotation comprise entre 115 et 135 tr/min pendant une durée comprise
entre 60 et 200 secondes ; et
(c) ajouter l'au moins un agent hydrophile tout en mélangeant la masse à une vitesse de rotation inférieure à 80 tr/min pendant une durée comprise entre 10 et 30 secondes, dans lequel l'agent hydrophile est choisi dans le groupe constitué de polyols, eau, solutions aqueuses et des mélanges de ceux-ci, et l'ingrédient à particules solides est choisi
dans le groupe constitué de poudre de cacao ; poudre de fruits secs ; poudre de légumes secs ; jus et feuilles de légumes séchés ; farine de tapioca et farine de pommes de terre ; farine de graines de fruits grillées ; poudre de noix de coco ; protéines végétales de toutes sortes ; et mélanges de ceux-ci.

2. Garniture de confiserie à base de matière grasse qui peut être obtenue selon un procédé selon la revendication 1, comprenant :
des matières grasses dans une quantité comprise entre 10 et 40 % p/p ;
de l'huile dans une quantité comprise entre 10 et 40 % ;
un agent hydrophile liquide à température ambiante en quantité comprise entre 0,05 % et 5 % p/p ;
un ingrédient à particules solides sous la forme d'une poudre fine dans une quantité comprise entre 60 et 90 % p/p, dans laquelle l'agent hydrophile est choisi dans le groupe constitué de polyols, eau, solutions aqueuses et des mélanges de ceux-ci, et la particule solide
est choisie dans le groupe constitué de poudre de cacao ; poudre de fruits secs ; poudre de légumes secs ; jus et feuilles de légumes séchés ; farine de tapioca et farine de pommes de terre ; farine de graines de fruits grillées ; poudre de noix de coco ; protéines végétales de toutes sortes ; et mélanges de ceux-ci.

3. Garniture de confiserie selon la revendication 2, dans laquelle la matière grasse est de l'huile de tournesol ou de soja.

4. Garniture de confiserie selon l'une quelconque des revendications 2 ou 3, dans laquelle l'agent hydrophile est le glycérol.

5. Garniture de confiserie selon l'une quelconque des revendications 2 à 4, dans laquelle l'ingrédient à particules solides est de la poudre de cacao.

6. Garniture de confiserie selon l'une quelconque des revendications 2 à 4, dans laquelle l'ingrédient à particules solides est au moins en partie sous forme cristalline.

7. Utilisation d'un réseau d'ingrédients à particules solides dans une garniture de confiserie à base de dispersion continue de matières grasses pour réduire la quantité de matières grasses totales et/ou saturées dans la garniture, dans laquelle le réseau est formé entre des particules de l'ingrédient à particules solides et l'agent hydrophile présent dans la phase continue de matières grasses, dans laquelle le procédé selon la revendication 1 est utilisé pour préparer le réseau.
